# EUROPEAN PATENT SPECIFICATION

(11) **EP 4 175 290 B1**
(45) Date of publication and mention of the grant of the patent: **25.06.2025**
(21) Application number: 22197026.2
(22) Date of filing: 22.09.2022
(51) Int. Cl.: H04N 7/18, G06Q 10/0633, G06Q 50/40

(54) **MONITORING OF FLOW UNITS**
ÜBERWACHUNG VON FLUSSEINHEITEN
SURVEILLANCE D'UNITÉS DE FLUX

(30) Priority: 27.10.2021 FR 2111383
(43) Date of publication of application: 03.05.2023
(73) Proprietor: Genetec Inc., St-Laurent, Québec H4S 2A4 (CA)
(72) Inventor: ROSSIGNOL, Nicolas, 92270 Bois Colombes (FR)
(74) Representative: IPAZ

(56) References cited:
- CN-A- 109 214 274
- CN-A- 109 241 947
- US-A1- 2017 132 475

## Description

### Field

The present disclosure relates generally to monitoring systems, and more specifically to monitoring of units of flow through geographical space.

### Background

For operators of critical infrastructure installations like airports, rail stations, other transit hubs, offices, stadiums, and the like, maintaining a complete and up-to-date overview of the various systems used to manage an installation is important. In many cases, infrastructure installations use a variety of disparate monitoring systems, which may include perimeter surveillance systems, security camera systems, motion detecting systems, passenger monitoring systems, vehicle monitoring systems, image and video analytics systems, and the like. In many cases, these disparate monitoring systems do not communicate with out another, and may report information to disparate control systems, or via system-specific displays, leading to an abundance of information which may not easily be digestible by the operators of the infrastructure. For instance, operators may need to look at or swap between multiple different programs or screens to access different information, and may not have access to a holistic view in a single display. For example, document US2017/0132475 A1 describes a guidance processing apparatus and a guidance method based on pieces of guidance information limited to a target area. Documents CN109241947A and CN 109214274 also disclose similar techniques.

Additionally, depending on how the disparate monitoring systems are deployed, information obtained by one system may be reported differently from information obtained by a different system. For example, the classifying of information may be done differently from one system to the next, leading to confusion when different systems are reporting different information for the same zone of the installation, or are reporting similar information for different zones.

As such, improvements to monitoring systems may be desirable.

### Summary

The following presents a simplified summary of one or more implementations in accordance with aspects of the present disclosure in order to provide a basic understanding of such implementations. The geographical location is composed of multiple geographically-distinct zones, each being assigned a particular physical process which is monitored by one or more sensors. The monitoring may be performed using a processing area framework which is used to model an installation as several modules, called processing areas, which can be linked together by inputs and outputs of the processing areas to represent how the flow units move between the processing areas. The processing areas include activity modules and sensors which process the flow units moving within the geographic zone associated with the processing area. The present disclosure additionally describes, *inter alia,* methods, systems, devices, and computer-readable media for monitoring flow information in the form of flow units within a geographical location.

In accordance with a broad aspect, the present disclosure provides a method of monitoring a flow of flow units within a geographical location composed of a plurality of geographically distinct zones having assigned thereto a respective physical process monitored by at least one sensor. The method comprises: establishing a plurality of processing areas for data segregation within the geographical location, each processing area being associated with a respective one of the plurality of geographically distinct zones; generating, for each processing area, an activity module based on the physical process assigned to the associated geographically distinct zone, each activity module associated with a type of flow unit, defining an input for obtaining input flow units and an output for outputting output flow units, and performing processing of the flow units therebetween using input obtained from the at least one sensor monitoring the respective physical process assigned to the respective associated zone; and linking the plurality of processing areas by coupling activity modules across different processing areas, comprising linking the flow outputs with the flow inputs of different activity modules, thereby segregating data processing across the different processing areas.

In at least some embodiments according to any one or more of the previous embodiments, said establishing the plurality of processing areas within the geographical location comprises associating separate enclosed portions within the geographical location to separate processing areas.

In at least some embodiments according to any one or more of the previous embodiments, said establishing the plurality of processing areas within the geographical location comprises subdividing an enclosed portion of the geographical location into multiple of the geographically distinct zones and associating a respective processing area thereto.

In at least some embodiments according to any one or more of the previous embodiments, said generating the activity module for each processing area comprises selecting the activity module to be generated for each processing area from a plurality of predetermined activity modules based on the respective physical process assigned to the respective associated zone.

In at least some embodiments according to any one or more of the previous embodiments, said linking the plurality of processing areas comprises linking a first output of a first activity module, associated with a first type of flow unit, with a first input of a second activity module, associated with a second type of flow unit, via a conversion to convert flow information of the first type of flow unit to flow information of the second type of flow unit.

In at least some embodiments according to any one or more of the previous embodiments, said linking the plurality of processing areas comprises linking a first output of a first activity module to a first input of a second activity module, and linking a second output of the first activity module to a first input of a third activity module.

In at least some embodiments according to any one or more of the previous embodiments, the first output of the first activity module is associated with a first type of flow unit, and wherein the second output of the first activity module is associated with a second type of flow unit.

In at least some embodiments according to any one or more of the previous embodiments, the first and second outputs of the first activity module are associated with a common type of flow unit, and wherein said linking comprises dividing output flow units from the first activity module into the first input of the second activity module and the first input of the third activity module.

In at least some embodiments according to any one or more of the previous embodiments, said dividing is updated in response to newly acquired flow information within the geographical location.

In at least some embodiments according to any one or more of the previous embodiments, said dividing is based on historical data acquired within the geographical location.

In at least some embodiments according to any one or more of the previous embodiments, said associating the activity module of each processing area with the at least one sensor disposed proximate to the associated zone comprises associating a first activity module with at least one first sensor being configured to acquire flow information of a same type of flow unit as is associated with the first activity module.

In at least some embodiments according to any one or more of the previous embodiments, a first activity module is associated with a plurality of types of flow units, and wherein the at least one sensor monitoring the physical process assigned to the geographically distinct zone with which the first activity module is associated comprises a plurality of sensors including, for each of the plurality of types of flow units, at least one first sensor configured to acquire flow information of a respective type of flow unit.

In at least some embodiments according to any one or more of the previous embodiments, the method comprises simulating the flow of flow units by: generating simulated input flow units for an input of at least one of the activity modules; and simulating a response of the activity modules based on the simulated input flow units.

In at least some embodiments according to any one or more of the previous embodiments, said generating simulated input flow units comprises generating simulated sensor input for at least one activity module, the simulated sensor input based on the respective at least one sensor monitoring the physical process assigned to the geographically distinct zone with which the at least one activity module is associated.

In at least some embodiments according to any one or more of the previous embodiments, the method comprises updating at least one of a conversion ratio of a conversion associated with at least some of the activity modules and a dividing ratio of a division associated with the at least some of the activity modules based on the simulated response of the activity modules.

In at least some embodiments according to any one or more of the previous embodiments, said generating the activity module for each processing area comprises generating, for a first processing area associated with a customs zone having assigned thereto a customs process, an activity module based on the customs process and associated with a first type of flow unit indicative of an individual person.

In at least some embodiments according to any one or more of the previous embodiments, said generating the activity module for each processing area comprises generating, for a first processing area associated with a baggage sorting zone having assigned thereto a baggage sorting process, an activity module based on the baggage sorting process and associated with a first type of flow unit indicative of a baggage element.

In at least some embodiments according to any one or more of the previous embodiments, said generating the activity module for each processing area comprises generating, for a first processing area associated with a apron zone having assigned thereto a taxiing process, an activity module based on the taxiing process and associated with a first type of flow unit indicative of an individual aircraft.

In accordance with another broad aspect, the present disclosure provides a system for monitoring a flow of flow units within a geographical location composed of a plurality of geographically distinct zones having assigned thereto a respective physical process monitored by at least one sensor. The system comprises a processing unit and a non-transitory computer-readable medium. The non-transitory computer-readable medium has stored thereon instructions, which are executable by the processing unit for: establishing a plurality of processing areas for data segregation within the geographical location, each processing area being associated with a respective one of the plurality of geographically distinct zones; generating, for each processing area, an activity module based on the physical process assigned to the associated geographically distinct zone, each activity module associated with a type of flow unit, defining an input for obtaining input flow units and an output for outputting output flow units, and performing processing of the flow units therebetween using input obtained from the at least one sensor monitoring the respective physical process assigned to the respective associated zone; and linking the plurality of processing areas by coupling activity modules across different processing areas, comprising linking the flow outputs with the flow inputs of different activity modules, thereby segregating data processing across the different processing areas.

In accordance with a further broad aspect, there is provided a non-transitory computer-readable medium having stored thereon instructions executable by a processing unit. The execution of the instructions cause the processing unit to monitor a flow of flow units within a geographical location, comprising: establishing a plurality of processing areas for data segregation within a geographical location composed of a plurality of geographically distinct zones having assigned thereto a respective physical process monitored by at least one sensor, each processing area being associated with a respective one of the plurality of geographically distinct zones; generating, for each processing area, an activity module based on the physical process assigned to the associated geographically distinct zone, each activity module associated with a type of flow unit, defining an input for obtaining input flow units and an output for outputting output flow units, and performing processing of the flow units therebetween using input obtained from the at least one sensor monitoring the respective physical process assigned to the respective associated zone; and linking the plurality of processing areas by coupling activity modules across different processing areas, comprising linking the flow outputs with the flow inputs of different activity modules, thereby segregating data processing across the different processing areas.

### Brief Description of the Drawings

For a more complete understanding of the present disclosure, reference is now made to the accompanying drawings. The following brief descriptions of the drawings should not be considered limiting in any fashion.
FIG. 1 is a schematic diagram of an example airport.
FIG. 2A is a schematic diagram of an example departures lobby zone of an airport.
FIG. 2B is a schematic diagram of an example runway and apron zone of an airport.
FIG. 3 is a block diagram of an example processing area framework for the airport of FIG. 1.
FIGs 4A-E are block diagrams of selected processing areas of the processing area framework of FIG. 3.
FIG. 5 is a block diagram of an example computing system.
FIG. 6 is a flowchart illustrating an example method for monitoring a flow of flow units within a geographical location.

It will be noted that throughout the appended drawings, like features are identified by like reference numerals.

### Detailed Description

The present disclosure relates to methods, systems, devices, and computer-readable media for monitoring flow information in the form of flow units within a geographical location. Flow units may be used to represent the flow of various different entities, including persons, groups of persons, other living creatures, vehicles, as well different types of objects, such as baggage, packages or other mail items, or the like. For example, a single flow unit may be used to represent a single person, a single vehicle, a single piece of baggage, or the like, or may be used to represent a group of persons, vehicles, baggage, or the like, which flow together as a whole in a particular context. Many embodiments of the present disclosure will be presented in the context of certain infrastructure installations, for instance within the context of an airport. It should be understood, however, that the techniques described herein may be applied to a variety of different contexts, in which flow units are used to monitor the flow of various different objects.

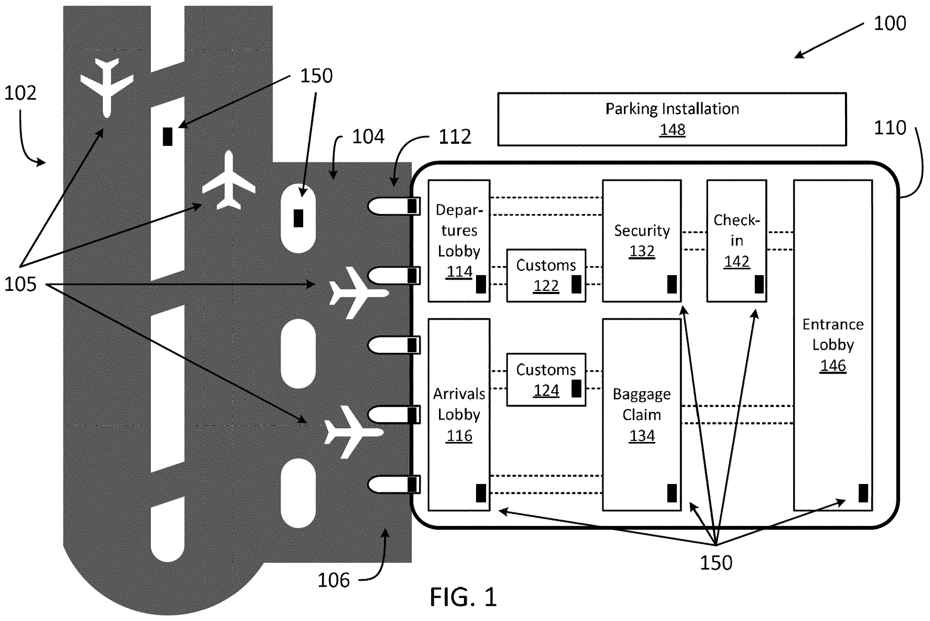

With reference to FIG. 1, a schematic diagram of an airport 100 is presented. The airport 100 includes both outdoor and indoor installations; for simplicity, the indoor installations of the airport 100 are illustrated inside building 110, but it should be understood that other airports may include multiple buildings through which indoor installations may be distributed. Additionally, the installations described in the present disclosure should not be considered as limiting: in other scenarios, the airport 100 may include other indoor and outdoor installations, as appropriate, and the techniques described herein may be applied to the other installations in any suitable fashion.

The outdoor installations, as well as the main building 110, are composed of different zones which are geographically distinct from one another. That is to say, the airport 100 can be subdivided into different zones having definite geographical boundaries. Each zone is also assigned a specific physical process that is performed within that zone. In some cases, the boundaries between geographically distinct zones may be dictated by the physical structure of the installation. For example, one geographically distinct zone may be specified as such due to being an enclosed room, or due to being a zone having a clear division from other areas. In other cases, the boundaries may be defined in other ways: for instance, a common enclosed room may be subdivided into multiple zones, based on different or separate physical processes.

As illustrated in FIG. 1, the airport 100 includes, as geographically distinct zones, a runway 102, an apron 104 (sometimes referred to as the tarmac), parking slots 106, where aircraft may be parked by respective gates 112, as well as one or more parking installations 148 where travellers may park their cars or other vehicles. The runway 102 is associated with the physical process of allowing takeoff and landing of aircraft 105. The apron 104 is associated with the physical process of taxiing the aircraft 105, for instance between the runway 102 and the parking slots 106, or between other installations of the airport 100, which may include maintenance bays, refueling stations, hangars or other storage facilities, and the like. The parking slots 106 are associated with the physical process of coupling aircraft 105 with gates 112, for instance for allowing passengers to embark or disembark from the aircraft 105, to allow for baggage to be onboarded or offboarded from the aircraft 105, for resupplying the aircraft 105, or the like. The parking installation 148 is associated with the physical process of parking travellers' vehicles, and may also house other operations, including parking payment stands, vehicle rental locations, and the like.

The airport 100 also includes a number of indoor zones: gates 112, a departures lobby 114, an arrivals lobby 116, customs zones 122, 124, a security zone 132, a baggage claim 134, a check-in zone 142, and an entrance lobby 146. The gates 112 are associated with the physical process of embarking or disembarking passengers on and from the aircraft 105, and of loading and unloading cargo and supplies on and from the aircraft 105. The departure and arrival lobbies 114, 116 are associated with the physical process of admitting passengers to and from the gates 112. Customs zones 122, 124 are associated with the physical process of processing passengers for customs purposes. Security zone 132 is associated with the physical process of performing security screening of passengers. Baggage claim zone 134 is associated with the physical process of sorting baggage and returning it to passengers. Check-in zone 142 is associated with the physical process of checking-in passengers and to receiving their baggage. The entrance lobby 146 is associated with the physical process of directing passengers to other zones.

It should be noted that the airport 100 may include additional zones beyond those depicted in FIG. 1, including muster areas, queueing areas, corridors linking the various zones, and the like. In some cases, a given zone may have multiple physical processes associated therewith, which may lead to the zone being subdivided into multiple sub-zones with respective physical processes. Additionally, the embodiments described herein may apply to airports having other zones and configurations thereof, for instance airports having multiple separate indoor installations and transit links therebetween. Moreover, the present disclosure may also apply to other installations or contexts which may be composed of other types of geographically distinct zones.

The physical processes assigned to the geographically distinct zones of the airport 100 are monitored via one or more sensors, indicated at 150. Depending on the type of physical process assigned to a particular zone, and on the type of flow monitored within the particular zone, different types of sensors may be deployed. By way of an example, in zones where the monitoring is of flow units indicative of persons, the sensors 150 may include cameras, people counters, mobile phone monitors, and the like. For instance, a laser-based people counter can be positioned at an ingress point into a zone, to count the number of persons who enter into the zone based on how frequently the laser of the sensor is broken. By way of another example, in zones where the monitoring is of flow units indicative of baggage, the sensors 150 may include cameras, optical code readers, RFID readers, and the like. By way of a further example, in zones where the monitoring is of flow units indicative of vehicles, the sensors 150 may include radar sensors, cameras, stand-guidance systems, and the like. Additionally, although referred to herein as sensors 150, it should be understood that other devices via which information may be acquired are also considered. By way of an example, monitoring of the physical processes in a particular zone may also be performed by acquiring information from various types of databases or analytics systems associated with a particular zone. For instance, within the runway 102 and/or the apron 104, monitoring of flow units may include acquiring information from an automatic dependent surveillance-broadcast (ADSB) system of one or more of the aircraft 105, or from an airport operational database (AODB) maintained by a relevant authority or regulatory body. In another instance, the camera-type sensors may acquire images and/or video which may be provided to various analytics systems, which may extract additional information from the images and/or video, such as crowd size values, throughput evaluations, and the like. It should be understood that the use of flow units to monitor and model the flow of persons and/or objects through geographical spaces does not necessitate precise localization of each of the flow units within the geographical spaces. In certain embodiments, the monitoring and modelling of flow units may involve localizing flow units as broadly being located within a geographical space, as well as broadly transiting between geographical spaces, without knowing the precise location of those flow units inside the geographical spaces in question.

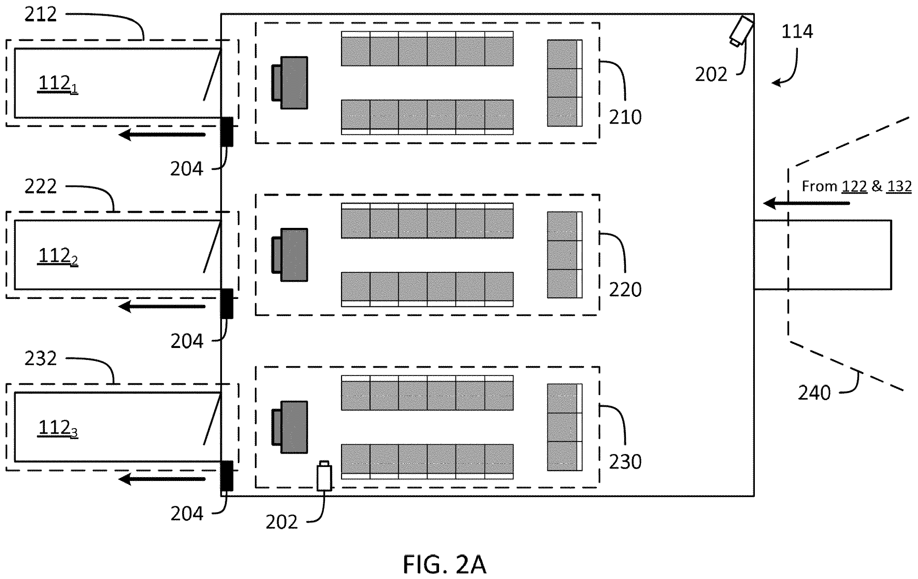

With additional reference to FIG. 2A, a schematic view of the departures lobby 114 and of some of the gates 112 is illustrated. As noted hereinabove, to monitor flow units, different processing areas for data segregation may be established within the geographical location. In some cases, certain structures of the airport 100 may be subdivided into multiple geographically distinct zones for monitoring of flow units. As flow units represent a discretization of different types of flow, whether persons, objects, vehicles, or the like, flow units may be monitored on a per-zone basis in order to assess their importance within the geographically distinct zones, and flow between zones may be modeled accordingly.

As illustrated in FIG. 2A, the departures lobby 114 has established therein three processing areas 210, 220, 230, which correspond to waiting areas within the departures lobby 114 for gates 112₁, 112₂, and 112₃, respectively. Additionally, each of the gates 112₁, 112₂, and 112₃ has established therein a respective processing area 212, 222, 232. The processing areas 210, 212, 220, 222, 230, 232 are defined by the geographical boundaries for the associated geographically distinct zone. Thus, the processing area 210, which is associated with a waiting area for gate 112₁, includes a relevant seating area and a boarding gate, where the physical process of assembling passengers to pass through the gate 112₁ occurs. Similarly, the processing area 212, which is associated with the gate 112₁, includes the area of the gate 112₁, where the physical process of, in the case of departures, embarking passengers on one of the aircraft 105, and of loading cargo and supplies on the aircraft 105. The physical process of assembling passengers, occurring in the waiting area for gate 112₁, may be monitored by the cameras 202 disposed within the departures lobby 114. It should be noted that the cameras 202 need not be disposed within the geographically distinct zone associated with the processing area 210 to monitor the physical process occurring therein. Additionally, the cameras 202 disposed within the departures area 114 may be used to monitor the physical processes occurring withing geographically distinct zones of the three processing areas 210, 220, 230 within the departures lobby 114. Similarly, person counters may be located at respective entrances of the gates 112₁, 112₂, and 112₃, and may be used to monitor, at least in part, the physical processes occurring therein. It should be noted that additional sensors 150 may be used to monitor the physical processes, including additional cameras 202, additional person counters 204, or the like.

By establishing the processing areas 210, 212, 220, 222, 230, 232, the flow of flow units between the processing areas, as well as from a preceding processing area 240 (associated, e.g., with the customs 122 and/or the security zone 132) can be monitored. The flow units within the departures lobby 114 and the gates 112 are processed separately based on the processing area in which they are present: data acquired, for example by the cameras 202, about the flow units within the processing area 210 is used to model flow within the geographically distinct zone associated with the processing area 210. In this fashion, data acquired about one of the processing areas 210, 212, 220, 222, 230, 232 is processed separately from the data acquired about the other processing areas, thereby segregating the flow information from one processing area to the next. Additionally, flow units (e.g., persons, baggage, etc.) will flow from one processing area to another, for instance from the processing area 210 to the processing area 212. The flow of flow units from one processing area to the next can be monitored based on information acquired from sensors in downstream processing areas, and also via modelling of the physical process occurring with the associated geographically distinct zone, as will be described in greater detail hereinbelow. Monitoring of the flow of flow units between processing areas, for example between the processing areas 210, 212, 220, 222, 230, 232, may allow operators of the airport 100 to identify potential issues before they occur. For instance, operators may be able to pre-emptively identify a large flow of flow units about to arrive at a particular processing area, and dispatch security personnel or other agents to account for the flow. Operators may also be able to alert security personnel of potential issues, to identify potential problem areas within the airport, and the like.

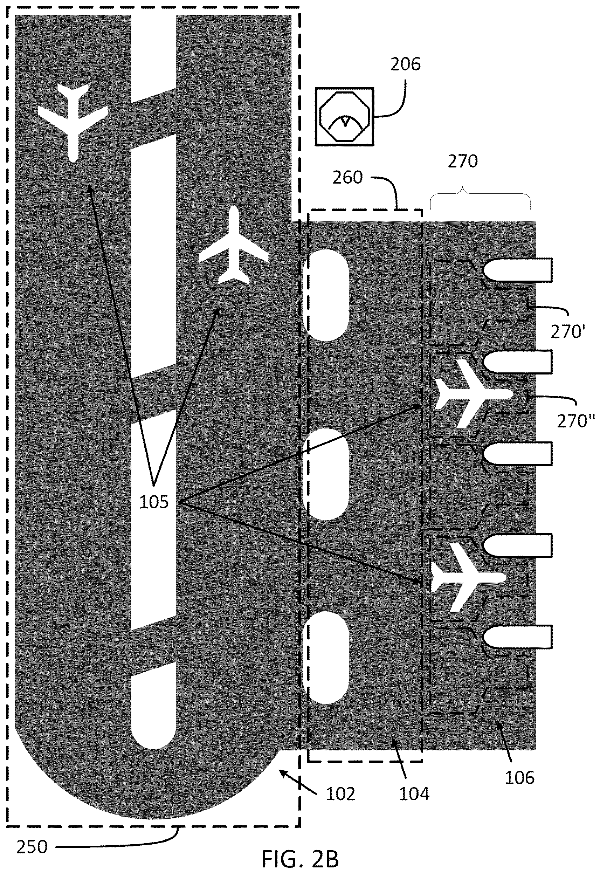

With additional reference to FIG. 2B, a schematic diagram of the runway 102, apron 104, and parking slots 106 is illustrated. A processing area 250 is established for the runway 102, a processing area 206 for the apron 104, and multiple processing areas 270 are established for the parking slots 106 (e.g., processing areas 270', 270", etc.). Sensors which monitor the physical processes with the runway 102, apron 104, and parking slots 106 may include various cameras, a radar tower 206, the ADSB systems of the aircraft 105 and other sensors, as appropriate. Additionally, databases and analytics services may be used as sources of flow information, for instance the aforementioned AODB, and the like. In the processing areas 250, 260, 270, flow of flow units representing aircraft 105, or vehicles more generally (e.g., to account for the presence of service vehicles, other passenger transport vehicles, and the like) may be monitored. Monitoring of the flow of flow units between processing areas, for example between the processing areas 250, 260, 270, may allow operators of the airport 100 to pre-emptively dispatch additional service vehicles in response to increased flow through the processing areas 250 and 260, or to prepare additional security personnel and other staff at the gates 112 in response to increased flow at the processing areas 270.

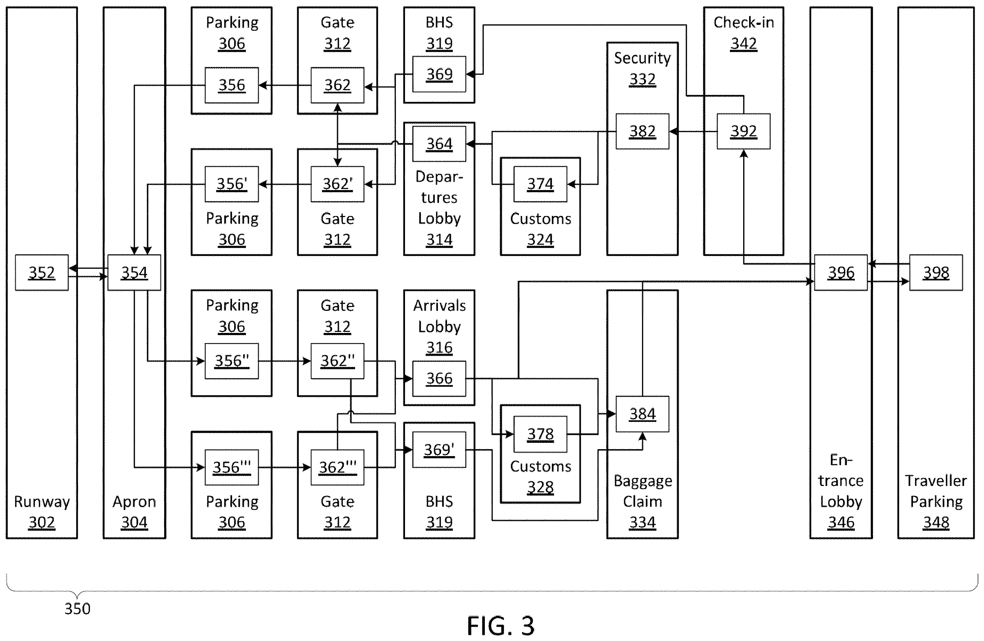

With reference to FIG. 3, the airport 100 may be modeled as a series of processing areas (collectively identified at 350) to monitor the flow of flow units within the airport 100. It should be understood that the representation of the airport 100 illustrated in FIG. 3 is an example, and that the airport 100 could be modeled differently, with a different arrangement of processing areas 350, as appropriate. As illustrated in FIG. 3, the airport 100 is modeled as composed of the following processing areas: a runway processing area 302, an apron processing area 304, parking slot processing areas 306, gate processing areas 312, a departures lobby processing area 314, an arrivals lobby processing area 316, baggage processing system processing areas 319, customs processing areas 324, 328, a security processing area 332, a baggage claim processing area 334, a check-in processing area 342, an entrance lobby processing area 346, and a traveller parking processing area 348.

As noted hereinabove, different physical processes take place in the different geographically distinct zones associated with the processing areas 350. To this end, activity modules are generated for each of the processing areas 350: the activity modules are based on the physical process assigned to the associated zone and are associated with a type of flow unit. The activity modules define an input for obtaining input flow units and an output for outputting output flow units, and perform processing of flow units therebetween. Additionally, the activity modules obtain input from the sensor(s) which monitor the physical processes assigned to the zone in question, which is additionally processed by the activity module. In some embodiments, one or more of the processing areas may have multiple activity modules generated therefor: the multiple activity modules may relate to different physical processes occurring concurrently in the same geographically distinct zone, and in some cases may also be associated with different types of flow units. For instance, the check-in processing area 342 may include two separate activity modules: a first for processing flow units relating to passengers, and a second for processing flow units relating to baggage being checked for stowing. Each of the activity modules may have respective flow inputs and flow units, and may obtain flow information from separate sensors, or from shared sensors, as appropriate.

In the example of FIG. 3, the runway processing area 302 is provided with an activity module 352, the apron processing area 304 is provided with an activity module 354, the parking slot processing areas 306 are provided with activity modules 356, 356', 356", 356‴, the gate processing areas 312 are provided with activity modules 362, 362', 362", 362'", the departures lobby processing area 314 is provided with an activity module 364, the arrivals lobby processing area 316 is provided with an activity module 366, the baggage processing system processing areas 319 are provided with activity modules 369, 369', customs processing areas 324, 328 are provided with respective activity modules 374, 378, the security processing area 332 is provided with an activity module 382, the baggage claim processing area 334 is provided with an activity module 384, the check-in processing area 342 is provided with an activity module 392, the entrance lobby processing area 346 is provided with an activity module 396, and the traveller parking processing area 348 is provided with an activity module 398.

In some embodiments, some of the activity modules 350 may be generated for their associated processing area by selecting a template activity module, for instance from a plurality of predetermined activity modules. The predetermined activity modules may each be associated with a particular physical process, and the activity module for a particular processing area may be selected based on the physical process assigned to the geographically distinct zone associated with the processing area. In some other embodiments, an implementation of the present disclosure may involve generating customized activity modules, depending on the physical processes occurring in the geographically distinct zones.

To monitor and model the flow of flow units from one processing area to the next, the processing areas are linked by coupling the activity modules 350 across the different processing areas. The coupling of the activity modules includes linking the flow outputs of some of the activity modules 350 with the flow inputs of other ones of the activity modules 350. In this fashion, the processing of the flow information is segregated across the different processing areas, whilst still allowing the flow of flow information between the processing areas to occur. The linking of outputs and inputs of the activity modules 350 is performed, for instance, to mirror the flows of flow units across the airport 100. By way of an example, the entrance lobby processing area 346 includes an output coupled to an input of the check-in processing area 342 activity module 392 and an output coupled to an input of the traveller parking processing area 348 activity module 398. The entrance lobby processing area 346 also includes a first input coupled to an output of the baggage claim processing area 334 activity module 384, a second input coupled to an output of the arrivals lobby processing area 316 activity module 366, and a third input coupled to an output of the traveller parking processing area 348 activity module 398. Thus, the activity module 396 of the entrance lobby processing area 346 receives inputs from three other activity modules, as well as from one or more sensors, and produces outputs to two other activity modules, while processing the flow information relevant to the entrance lobby processing area 346 within the activity module 396.

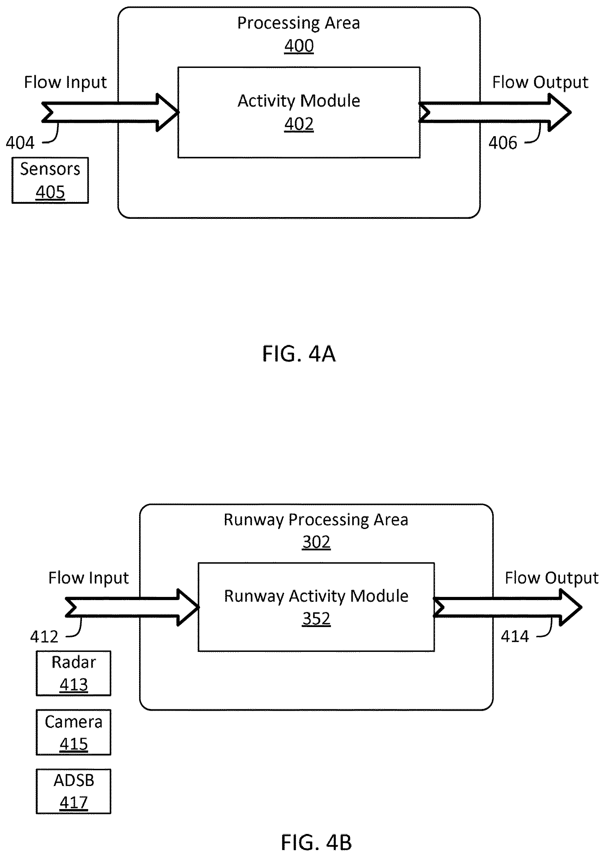

With reference to FIG. 4A, an embodiment of a processing area 400 is illustrated. The processing area 400 includes an activity module 402 and defines a flow input 404 and flow output 404. The flow input 404 may receive input flow units from other processing areas 400, as well as from sensors 405. The activity module 402 may be associated with one or more specific types of flow units, and obtains input flow units via the flow input 404 of the types of flow units with which the activity module 402 is associated. For example, the processing area 400 may be indicative of a waiting room, and the activity module 402 is associated with flow units representative of persons. The flow input 404 therefore obtains input flow units indicative of persons, whether from sensors 405 (e.g., person counters, cameras, etc.), or from another processing area 400. The flow units output by the flow output 406 of the activity module 402 may be of a same type of flow unit, or of different types. For example, the activity module may perform a conversion of flow units from one type to another prior to outputting the flow units, for instance via a conversion module (which may form part of the activity module). The conversion may vary over time, for instance in response to newly acquired input flow units within the processing area 400.

Additionally, although illustrated here as a singular flow input 404 and a singular flow output 406, it should be understood that the activity module may include multiple flow inputs 404 and flow output 406. In some embodiments, the activity module 402 is linked to multiple other activity modules 402 via separate flow outputs 406. For example, a first flow output 406 may be associated with a first type of flow unit, and a second flow output 406 may be associated with a second type of flow unit. The first flow output 406 may be coupled to the flow input 404 of a first other activity module 402 associated with the first type of flow unit, and the second flow output 406 may be coupled to a flow input 404 of a second other activity module 402 associated with the second type of flow unit. By way of another example, the other activity modules 402 to which the activity module 402 is coupled may be associated with the same type of flow unit. In this case, the activity module 402 can divide the output flow units into multiple flow outputs 406. The division of the output flow units can be based on particular flow information acquired from the sensors 405, or from other information available to the activity module 402, as appropriate. For instance, the activity module 402 may have access to, or otherwise be provided with, historical information about how output flow units flow to the various other activity modules 402 coupled to the flow output(s) 406. The activity module 402 may use the historical information about output flow units to model the output flow units being output by the flow output 406 to the other activity modules 402. Additionally, the activity module 402 may use newly acquired input flow units within the processing area 400, or other newly acquired flow information, to determine how to divide the output flow units.

In some embodiments, the processing area 400 may include multiple activity modules, which may relate to different physical processes occurring concurrently in the same geographically distinct zone, or to distinct instances of the same physical process occurring concurrently in the same geographically distinct zone. In some cases, the multiple activity modules may also be associated with different types of flow units. Each of the activity modules may have respective flow inputs and flow units, and may obtain flow information from separate sensors, or from shared sensors, as appropriate.

With reference to FIG. 4B, an example implementation of the runway processing area 302 is illustrated. The runway processing area 352 includes a runway activity module 352, with a flow input 412 and a flow output 414. The flow input 412 may receive flow inputs from multiple sensors, illustrated here as including a radar system 413, one or more cameras 415, and an ADSB system 417. Since the runway processing area 302 acts as a starting point for incoming flow units (indicative of aircraft 105), the runway activity module 352 may not be coupled to any other activity modules 400 via the flow input 412. Alternatively, the flow input 412 may be coupled to a flow output of the activity module 354 of the apron processing area 304, as aircraft 105 may move from the apron 104 to the runway 102 to prepare for takeoff. The flow output 414 of the runway activity module 352 may also be coupled to the activity module 354 of the apron processing area 354, as aircraft which have landed on the runway 102 may then move to the apron 104.

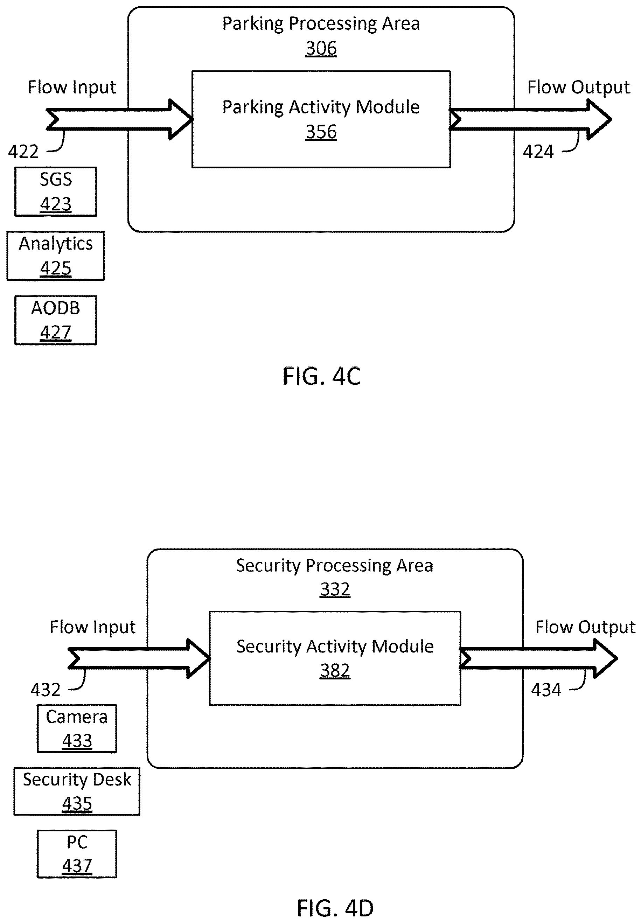

With reference to FIG. 4C, an example implementation of the parking processing area 306 is illustrated. The parking processing area 306 includes a parking activity module 356, with a flow input 422 and a flow output 424. The flow input 422 may receive flow inputs from multiple sensors, illustrated here as including a stand guidance system 423, one or more analytics systems 425, which may be based on images and/or video acquired from various cameras, and an AODB 427. The flow input 422 may be coupled to the flow output 414 of the runway activity module 352 and/or to a flow output of the apron activity module 354, thereby receiving input flow units indicative of aircraft 105, and the like. The flow output 424 may be coupled to a flow input of an activity module 362 associated with the gate processing area 312. As the parking activity module 356 receives input flow units indicative of aircraft 105, and as the activity module 362 associated with the gate processing area 312 may be associated with a type of flow unit indicative of a flow of persons, baggage, and the like, the parking activity module 356 may perform a conversion of flow units from an aircraft type to a person type, to a baggage type, and/or to any other suitable type, in order to provide the activity module 362 associated with the gate processing area 312 with appropriate flow unit inputs.

With reference to FIG. 4D, an example implementation of the security processing area 332 is illustrated. The security processing area 332 includes a security activity module 382, with a flow input 432 and a flow output 434. The flow input 432 may receive flow inputs from multiple sensors, illustrated here as including a camera 433, a security desk 435, and one or more people counters 437. In this context, the security desk 435 may be equipped with sensors configured for evaluation flow of flow units indicative of people, baggage, and the like. Alternatively, the security desk 435 operated by the security personnel may be configured to produce flow units as part of processing passengers and their baggage, which may then be provided to the security activity module 382 via the flow input 432. Additionally, the flow input 432 may be coupled to flow outputs of other activity modules 400, for instance the activity module 392 of the check-in processing area 342 and, in some cases, the activity module 396 of the entrance lobby processing area 346. The flow output 434 of the security activity module 382 may be coupled to a flow input of an activity module 374 associated with the customs processing area 324, and to a flow input of an activity module 364 associated with the departures lobby processing area 314. As the security activity module 382 receives input flow units indicative of both persons and baggage, the security activity module 382 may provide output flow units of the same types to the activity modules 374, 364, as appropriate.

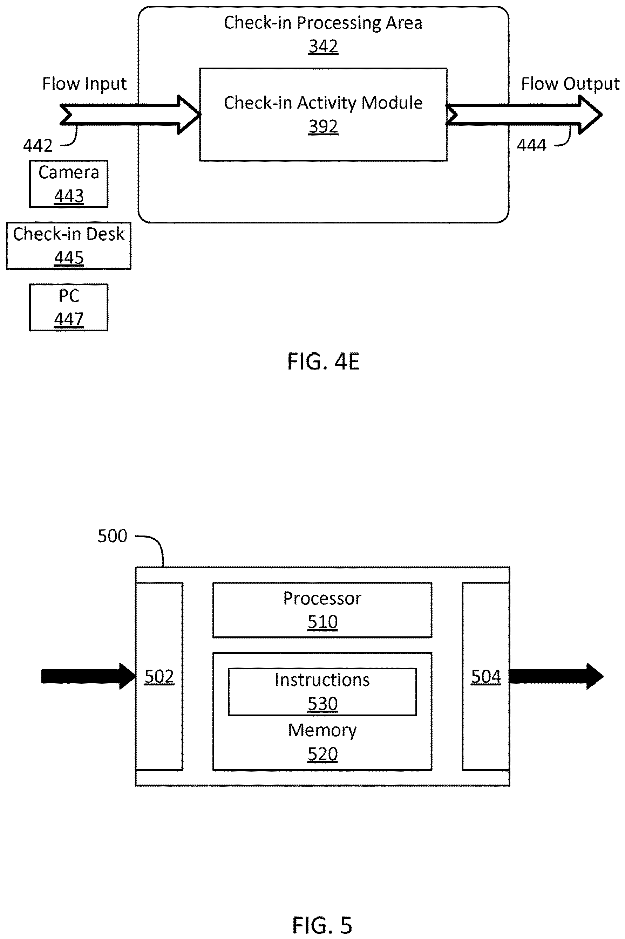

With reference to FIG. 4E, an example implementation of the check-in processing area 342 is illustrated. The check-in processing area 342 includes a check-in activity module 392, with a flow input 442 and a flow output 444. The flow input 442 may receive flow inputs from multiple sensors, illustrated here as including a camera 443, a check-in desk 445, and one or more people counters 447. In this context, the check-in desk445 may be equipped with sensors configured for evaluation flow of flow units indicative of people, baggage, and the like. Alternatively, the check-in desk 445 operated by the airline personnel may be configured to produce flow units as part of processing passengers and their baggage, which may then be provided to the check-in activity module 392 via the flow input 442. Additionally, the flow input 442 may be coupled to flow outputs of other activity modules 400, for instance the activity module 396 of the entrance lobby processing area 342. Because the check-in activity module 392 processes flow units relating to both passengers and baggage, the check-in activity module 392 may output flow units of different types to different other activity modules. For example, the flow output 44 may output flow units indicative of passengers to the security activity module 382 and flow units indicative of baggage to an activity module 369 of the baggage handling system processing area 319.

With reference to FIG. 5, there is illustrated a schematic diagram of an example computing device 500. As depicted, the computing device 500 includes at least one processing unit 510, a memory 520, and program instructions 530 stored within the memory 520, as well as input and output interfaces (I/O interfaces) 502 and 504, respectively. For simplicity, only one computing device 500 is shown, but any computing systems used to implement the processing area framework, including the activity modules 350, may be embodied by one or more implementations of the computing device 500. The computing devices 500 may be the same or different types of devices. The components of the computing device 500 may be connected in various ways including directly coupled, indirectly coupled via a network, and distributed over a wide geographic area and connected via a network, for instance via a cloud computing implementation.

The I/O interfaces 502, 504 may include one or more media interfaces, via which removable media or other data sources may be coupled, one or more network interfaces, or any other suitable type of interface. The I/O interfaces 502, 504 of the computing device 500 may additionally, in some embodiments, provide interconnection functionality to one or more input devices, such as a keyboard, mouse, camera, touch screen and a microphone, or with one or more output devices such as a display screen and a speaker. In embodiments in which the I/O interfaces 502, 504 include one or more network interfaces, the network interface(s) of the computing device 500 may enable the computing device 510 to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these.

The processing unit 510 may be, for example, any type of general-purpose microprocessor or microcontroller, a digital signal processing (DSP) processor, an integrated circuit, a field programmable gate array (FPGA), a reconfigurable processor, a programmable read-only memory (PROM), or any combination thereof. The memory 520 may include a suitable combination of any type of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like.

In certain embodiments, the computing device 500 is operable to register and authenticate users (using a login, unique identifier, and password for example) prior to providing access to applications, a local network, network resources, other networks and network security devices. The computing device 500 may serve one user or multiple users.

For example, and without limitation, the computing device 500 may be a server, network appliance, set-top box, embedded device, computer expansion module, personal computer, laptop, personal data assistant, cellular telephone, smartphone device, UMPC tablets, video display terminal, gaming console, electronic reading device, and wireless hypermedia device or any other computing device capable of being configured to carry out the methods and/or implementing the systems described herein.

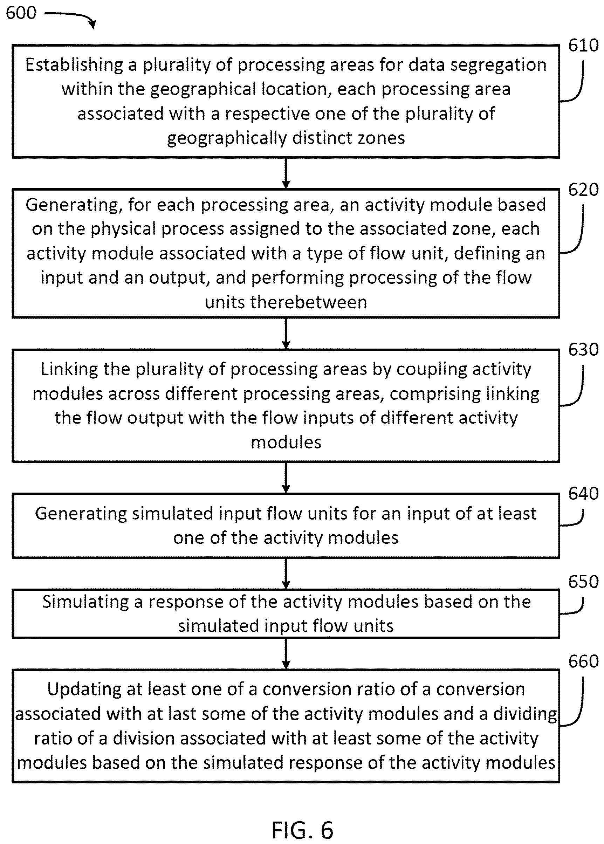

With reference to FIG. 6, there is illustrated a method 600 for monitoring a flow of flow units within a geographical location, for instance the airport 100. The geographical location is composed of a plurality of geographically distinct zones, for instance as illustrated in FIG. 1, which have assigned thereto respective physical processes. The physical processes may be monitored by one or more sensors, as described hereinabove. The method 600, in some embodiments, is implemented by the computing device 500, which may be a computing device belonging to or otherwise operated by an entity responsible for the geographical location.

At step 610, the method 600 includes establishing a plurality of processing areas for data segregation within the geographical location. Each of the processing areas is associated with a respective one of the plurality of geographically distinct zones, for instance as illustrated in FIG. 3. The processing areas may be associated with separate enclosed portions within the geographical location, may relate to subdivisions within enclosed spaces, or the like.

At step 620, the method 600 includes generating, for each processing area, an activity module based on the physical process assigned to the associated geographically distinct zone, for instance the activity modules 350 illustrated in FIG. 3, an example of which is the activity module 402 of FIG. 4. Each of the activity modules 350 is associated with a type of flow unit and defines an input for obtaining input flow units and an output for outputting output flow units, for instance the flow input 404 and the flow output 406 of the activity module 402. Additionally, the activity modules 350 performing processing of the flow units between the flow input 404 and the flow output 406, using input obtained from the at least one sensor (e.g., the sensor(s) 405) monitoring the respective physical process assigned to the respective zone associated to the processing area. The activity modules 350 may be generated by selecting one or more predetermined activity modules based on the associated physical processes, where templates or the like exist. In some embodiments, one or more of the processing areas may have multiple activity modules generated therefor: the multiple activity modules may relate to different physical processes occurring concurrently in the same geographically distinct zone, and in some cases may also be associated with different types of flow units.

At step 630, the method 600 includes linking the processing areas by coupling the activity modules 350 across different processing areas, for instance as illustrated in FIG. 3. The coupling of the activity modules 350 includes linking the flow outputs 406 of some of the activity modules 350 with the flow inputs 404 of different activity modules 350, thereby segregating data processing across the different processing areas 400. The activity modules 350 thereby process the flow units for their related geographically distinct zone within themselves, whilst allowing flow unit to flow between processing areas via the flow inputs and output 404, 406. This may include converting and/or dividing certain output flows of flow unit depending on the type of flow units processed by a particular activity module, and the type of flow units with which the activity module receiving the flow units is associated.

In some embodiments, as part of the method 600, simulation of the activity modules may be performed. Although illustrated as forming part of the method 600, it should be understood that the following steps may be performed at a time different than that at which the preceding steps are performed, and that in some embodiments some or all of the following steps may be performed independently of some or all of the preceding steps.

At step 640, the method 600 includes generated simulated input flow units for a flow input 404 of at least one of the activity modules 350. The simulated input flow units may include any suitable number of flow units, for instance to test maximum and/or minimum responses of the activity modules 350, or any other suitable input level. In some embodiments, the simulated input flow units may correspond to particular test cases for the activity modules 350, for instance based on historical data acquired from the airport 100. In some embodiments, the simulated input flow units include generated simulated sensor input for the one or more activity modules 350. The simulated input flow units may be based on the particular sensors 405 associated with each of the activity modules 350, which serve to monitor the physical process assigned to the geographically distinct zones with which the processing areas of the activity modules 350 are associated. The simulated input flow units, whether simulated as coming from sensors 405 or from other activity modules 402, may be placed at any of the flow inputs 404 of the activity modules 350. Put differently, the simulated input flow units may be used to simulate an arbitrary state for the activity modules 350, in order to prepare for eventual scenarios and/or to test the limits of the infrastructure installation, in this case the airport 100.

At step 650, the method 600 comprises simulating a response of the activity modules 350 based on the simulated input flow units. This may involve causing the simulated input flow units to be processed by the activity modules 350 in the processing areas to produce output flow units, which then move on to others of the activity modules 350 via the flow outputs 406. The simulation may be performed for any suitable length of time, and may involve simulating further input flow units to the activity modules 350 at other times. At step 660, the method 600 comprises updating a conversion ratio and/or a division ratio for some of the activity modules 350, based on the simulated response of the activity modules. Updates to the conversion ratio and/or division ratio of one or more of the activity modules 350 may be performed in order to perform different simulations, and therefore to see the response of the activity modules 350 under different conditions, or to account for information determined about the activity modules 350 as part of the simulation.

The present disclosure provides a framework for segregating data for processing between different processing areas via activity modules. By linking the activity modules together, the flow of flow units between different processing areas can be modeled, while allowing the processing of flow units to occur on a per-processing area basis. The present disclosure may be used to facilitate the monitoring of flow of flow units through a geographic location, and to standardize the acquisition and processing of data relating to the flow units.

The embodiments of the methods, systems, devices, and computer-readable media described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references have been made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The foregoing discussion provides many example embodiments. Although each embodiment represents a single combination of inventive elements, other examples may include all possible combinations of the disclosed elements. Thus, if one embodiment comprises elements A, B, and C, and a second embodiment comprises elements B and D, other remaining combinations of A, B, C, or D, may also be used.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and at least some of the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Although the embodiments have been described in detail, it should be understood that various changes, substitutions and alterations can be made herein without departing from the scope as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the examples described above and illustrated herein are intended to be examples only, and the appended claims define the scope of protection.

## Claims

1. A method of monitoring a flow of flow units within a geographical location composed of a plurality of geographically distinct zones having assigned thereto a respective physical process monitored by at least one sensor, **characterized in that** the method comprises:
- establishing a plurality of processing areas for data segregation within the geographical location, each processing area being associated with a respective one of the plurality of geographically distinct zones;
- generating, for each processing area, an activity module based on the physical process assigned to the associated geographically distinct zone, each activity module associated with a type of flow unit, defining an input for obtaining input flow units and an output for outputting output flow units, and performing processing of the flow units therebetween using input obtained from the at least one sensor monitoring the respective physical process assigned to the respective associated zone; and
- linking the plurality of processing areas by coupling activity modules across different processing areas, comprising linking the flow outputs with the flow inputs of different activity modules, thereby segregating data processing across the different processing areas.

2. The method of claim 1, wherein said establishing the plurality of processing areas within the geographical location comprises associating separate enclosed portions within the geographical location to separate processing areas.

3. The method of claim 1, wherein said establishing the plurality of processing areas within the geographical location comprises subdividing an enclosed portion of the geographical location into multiple of the geographically distinct zones and associating a respective processing area thereto.

4. The method of claim 1, wherein said generating the activity module for each processing area comprises selecting the activity module to be generated for each processing area from a plurality of predetermined activity modules based on the respective physical process assigned to the respective associated zone.

5. The method of claim 1, wherein said linking the plurality of processing areas comprises linking a first output of a first activity module, associated with a first type of flow unit, with a first input of a second activity module, associated with a second type of flow unit, via a conversion to convert flow information of the first type of flow unit to flow information of the second type of flow unit.

6. The method of claim 1, wherein said linking the plurality of processing areas comprises linking a first output of a first activity module to a first input of a second activity module, and linking a second output of the first activity module to a first input of a third activity module.

7. The method of claim 6, wherein the first output of the first activity module is associated with a first type of flow unit, and wherein the second output of the first activity module is associated with a second type of flow unit.

8. The method of claim 6, wherein the first and second outputs of the first activity module are associated with a common type of flow unit, and wherein said linking comprises dividing output flow units from the first activity module into the first input of the second activity module and the first input of the third activity module.

9. The method of claim 8, wherein said dividing is updated in response to newly acquired flow information within the geographical location.

10. The method of claim 8, wherein said dividing is based on historical data acquired within the geographical location.

11. The method of claim 1, wherein said associating the activity module of each processing area with the at least one sensor disposed proximate to the associated zone comprises associating a first activity module with at least one first sensor being configured to acquire flow information of a same type of flow unit as is associated with the first activity module.

12. The method of claim 1, wherein a first activity module is associated with a plurality of types of flow units, and wherein the at least one sensor monitoring the physical process assigned to the geographically distinct zone with which the first activity module is associated comprises a plurality of sensors including, for each of the plurality of types of flow units, at least one first sensor configured to acquire flow information of a respective type of flow unit.

13. The method of claim 1, comprising simulating the flow of flow units by:
- generating simulated input flow units for an input of at least one of the activity modules; and
- simulating a response of the activity modules based on the simulated input flow units.

14. The method of claim 13, wherein said generating simulated input flow units comprises generating simulated sensor input for at least one activity module, the simulated sensor input based on the respective at least one sensor monitoring the physical process assigned to the geographically distinct zone with which the at least one activity module is associated.

15. The method of claim 13, comprising updating at least one of a conversion ratio of a conversion associated with at least some of the activity modules and a dividing ratio of a division associated with the at least some of the activity modules based on the simulated response of the activity modules.

16. The method of claim 1, wherein said generating the activity module for each processing area comprises generating, for a first processing area associated with a customs zone having assigned thereto a customs process, an activity module based on the customs process and associated with a first type of flow unit indicative of an individual person.

17. The method of claim 1, wherein said generating the activity module for each processing area comprises generating, for a first processing area associated with a baggage sorting zone having assigned thereto a baggage sorting process, an activity module based on the baggage sorting process and associated with a first type of flow unit indicative of a baggage element.

18. The method of claim 1, wherein said generating the activity module for each processing area comprises generating, for a first processing area associated with a apron zone having assigned thereto a taxiing process, an activity module based on the taxiing process and associated with a first type of flow unit indicative of an individual aircraft.

19. A system for monitoring a flow of flow units within a geographical location composed of a plurality of geographically distinct zones having assigned thereto a respective physical process monitored by at least one sensor, the system comprising:
- a processing unit; and
- a non-transitory computer-readable medium having stored thereon instructions executable by the processing unit;
configured to carry out the method according to any one of the preceding claims.

20. A non-transitory computer-readable medium having stored thereon instructions executable by a processing unit, wherein execution of the instructions causes the processing unit to carry out the method according to any one of the claims 1 to 18.

## Patentansprüche

1. Verfahren zum Überwachen eines Flusses von Flusseinheiten innerhalb eines geografischen Ortes, der aus einer Vielzahl von geografisch unterschiedlichen Zonen besteht, denen jeweils ein physikalischer Prozess zugeordnet ist, der von mindestens einem Sensor überwacht wird, **dadurch gekennzeichnet, dass** das Verfahren umfasst:
- Einrichten einer Vielzahl von Verarbeitungsbereichen zur Datentrennung innerhalb des geografischen Ortes, wobei jeder Verarbeitungsbereich mit einer jeweiligen der Vielzahl von geografisch unterschiedlichen Zonen verknüpft ist;
- Erzeugen, für jeden Verarbeitungsbereich, eines Aktivitätsmoduls basierend auf dem physikalischen Prozess, welcher der verknüpften geografisch unterschiedlichen Zone zugeordnet ist, wobei jedes Aktivitätsmodul mit einer Art von Flusseinheit verknüpft ist, Definieren eines Eingangs zum Erhalten von Eingangsflusseinheiten und eines Ausgangs zum Ausgeben von Ausgangsflusseinheiten und Durchführen einer Verarbeitung der Flusseinheiten dazwischen unter Verwendung eines Eingangs, der von dem mindestens einen Sensor erhalten wird, der den jeweiligen physikalischen Prozess überwacht, welcher der jeweiligen verknüpften Zone zugeordnet ist; und
- Verbinden der Vielzahl von Verarbeitungsbereichen durch Koppeln von Aktivitätsmodulen über verschiedene Verarbeitungsbereiche, umfassend das Verbinden der Flussausgänge mit den Flusseingängen verschiedener Aktivitätsmodule, wodurch die Datenverarbeitung über die verschiedenen Verarbeitungsbereiche getrennt wird.

2. Verfahren nach Anspruch 1, wobei das Einrichten der Vielzahl von Verarbeitungsbereichen innerhalb des geografischen Ortes das Verknüpfen separater eingeschlossener Abschnitte innerhalb des geografischen Ortes mit separaten Verarbeitungsbereichen umfasst.

3. Verfahren nach Anspruch 1, wobei das Einrichten der Vielzahl von Verarbeitungsbereichen innerhalb des geografischen Ortes das Unterteilen eines umschlossenen Abschnitts des geografischen Ortes in mehrere der geografisch unterschiedlichen Zonen und das Verknüpfen eines jeweiligen Verarbeitungsbereichs mit diesen umfasst.

4. Verfahren nach Anspruch 1, wobei das Erzeugen des Aktivitätsmoduls für jeden Verarbeitungsbereich das Auswählen des für jeden Verarbeitungsbereich zu erzeugenden Aktivitätsmoduls aus einer Vielzahl von vorbestimmten Aktivitätsmodulen basierend auf dem jeweiligen physikalischen Prozess, welcher der jeweiligen verknüpften Zone zugeordnet ist, umfasst.

5. Verfahren nach Anspruch 1, wobei das Verknüpfen der Vielzahl von Verarbeitungsbereichen das Verknüpfen eines ersten Ausgangs eines ersten Aktivitätsmoduls, das mit einer ersten Art von Flusseinheit verknüpft ist, mit einem ersten Eingang eines zweiten Aktivitätsmoduls, das mit einer zweiten Art von Flusseinheit verknüpft ist, über eine Umwandlung umfasst, um Flussinformationen der ersten Art von Flusseinheit in Flussinformationen der zweiten Art von Flusseinheit umzuwandeln.

6. Verfahren nach Anspruch 1, wobei das Verknüpfen der Vielzahl von Verarbeitungsbereichen das Verknüpfen eines ersten Ausgangs eines ersten Aktivitätsmoduls mit einem ersten Eingang eines zweiten Aktivitätsmoduls und das Verknüpfen eines zweiten Ausgangs des ersten Aktivitätsmoduls mit einem ersten Eingang eines dritten Aktivitätsmoduls umfasst.

7. Verfahren nach Anspruch 6, wobei der erste Ausgang des ersten Aktivitätsmoduls mit einer ersten Art von Flusseinheit verknüpft ist und wobei der zweite Ausgang des ersten Aktivitätsmoduls mit einer zweiten Art von Flusseinheit verknüpft ist.

8. Verfahren nach Anspruch 6, wobei der erste und der zweite Ausgang des ersten Aktivitätsmoduls mit einer gemeinsamen Art von Flusseinheit verknüpft sind und wobei die Verknüpfung das Aufteilen von Ausgangsflusseinheiten aus dem ersten Aktivitätsmodul in den ersten Eingang des zweiten Aktivitätsmoduls und den ersten Eingang des dritten Aktivitätsmoduls umfasst.

9. Verfahren nach Anspruch 8, wobei das Aufteilen als Reaktion auf neu erfasste Flussinformationen innerhalb des geografischen Ortes aktualisiert wird.

10. Verfahren nach Anspruch 8, wobei das Aufteilen auf historischen Daten basiert, die innerhalb des geografischen Ortes erfasst wurden.

11. Verfahren nach Anspruch 1, wobei das Verknüpfen des Aktivitätsmoduls jedes Verarbeitungsbereichs mit dem mindestens einen Sensor, der in der Nähe der verknüpften Zone angeordnet ist, das Verknüpfen eines ersten Aktivitätsmoduls mit mindestens einem ersten Sensor umfasst, der konfiguriert ist, um Flussinformationen derselben Art von Flusseinheit, die mit dem ersten Aktivitätsmodul verknüpft ist, zu erfassen.

12. Verfahren nach Anspruch 1, wobei ein erstes Aktivitätsmodul mit einer Vielzahl von Arten von Flusseinheiten verknüpft ist und wobei der mindestens eine Sensor, der den physikalischen Prozess überwacht, welcher der geografisch unterschiedlichen Zone zugeordnet ist, mit der das erste Aktivitätsmodul verknüpft ist, eine Vielzahl von Sensoren umfasst, einschließlich, für jede der Vielzahl von Arten von Flusseinheiten, mindestens eines ersten Sensors, der konfiguriert ist, um Flussinformationen einer jeweiligen Art von Flusseinheit zu erfassen.

13. Verfahren nach Anspruch 1, umfassend das Simulieren des Flusses von Flusseinheiten durch:
- Erzeugen simulierter Eingangsflusseinheiten für einen Eingang von mindestens einem der Aktivitätsmodule und
- Simulieren einer Reaktion der Aktivitätsmodule basierend auf den simulierten Eingangsflusseinheiten.

14. Verfahren nach Anspruch 13, wobei das Erzeugen simulierter Eingangsflusseinheiten das Erzeugen simulierter Sensoreingaben für mindestens ein Aktivitätsmodul umfasst, wobei die simulierten Sensoreingaben auf dem jeweiligen mindestens einen Sensor basieren, der den physikalischen Prozess überwacht, welcher der geografisch unterschiedlichen Zone zugeordnet ist, mit der das mindestens eine Aktivitätsmodul verknüpft ist.

15. Verfahren nach Anspruch 13, umfassend das Aktualisieren mindestens eines Umwandlungsverhältnisses einer Umwandlung, die mit mindestens einigen der Aktivitätsmodule verknüpft ist, und eines Aufteilungsverhältnisses einer Aufteilung, die mit mindestens einigen der Aktivitätsmodule verknüpft ist, basierend auf der simulierten Reaktion der Aktivitätsmodule.

16. Verfahren nach Anspruch 1, wobei das Erzeugen des Aktivitätsmoduls für jeden Verarbeitungsbereich das Erzeugen eines Aktivitätsmoduls für einen ersten Verarbeitungsbereich, der mit einer Zollzone verknüpft ist, der ein Zollprozess zugeordnet ist, basierend auf dem Zollprozess und verknüpft mit einer ersten Art von Flusseinheit, die eine einzelne Person angibt, umfasst.

17. Verfahren nach Anspruch 1, wobei das Erzeugen des Aktivitätsmoduls für jeden Verarbeitungsbereich das Erzeugen eines Aktivitätsmoduls für einen ersten Verarbeitungsbereich, der mit einer Gepäcksortierzone verknüpft ist, der ein Gepäcksortierprozess zugeordnet ist, basierend auf dem Gepäcksortierprozess und verknüpft mit einer ersten Art von Flusseinheit, die ein Gepäckelement angibt, umfasst.

18. Verfahren nach Anspruch 1, wobei das Erzeugen des Aktivitätsmoduls für jeden Verarbeitungsbereich das Erzeugen eines Aktivitätsmoduls für einen ersten Verarbeitungsbereich, der mit einer Vorfeldzone verknüpft ist, der ein Rollprozess zugeordnet ist, basierend auf dem Rollprozess und verknüpft mit einer ersten Art von Flusseinheit, die ein einzelnes Luftfahrzeug angibt, umfasst.

19. System zum Überwachen eines Flusses von Flusseinheiten innerhalb eines geografischen Ortes, der aus einer Vielzahl von geografisch unterschiedlichen Zonen besteht, denen jeweils ein physikalischer Prozess zugeordnet ist, der von mindestens einem Sensor überwacht wird, wobei das System umfasst:
- eine Verarbeitungseinheit und
- ein nicht-transitorisches computerlesbares Medium, auf dem Anweisungen gespeichert sind, die durch die Verarbeitungseinheit ausführbar sind,
das konfiguriert ist, um das Verfahren nach einem der vorstehenden Ansprüche auszuführen.

20. Nicht-transitorisches computerlesbares Medium, auf dem durch eine Verarbeitungseinheit ausführbare Anweisungen gespeichert sind, wobei die Ausführung der Anweisungen die Verarbeitungseinheit veranlasst, das Verfahren nach einem der Ansprüche 1 bis 18 auszuführen.

## Revendications

1. Procédé de surveillance d'un flux d'unités de flux au sein d'un emplacement géographique composé d'une pluralité de zones géographiquement distinctes auxquelles est attribué un processus physique respectif surveillé par au moins un capteur, **caractérisé en ce que** le procédé comprend :
- l'établissement d'une pluralité de régions de traitement pour une ségrégation de données au sein de l'emplacement géographique, chaque région de traitement étant associée à une zone respective de la pluralité de zones géographiquement distinctes ;
- la génération, pour chaque région de traitement, d'un module d'activité sur la base du processus physique attribué à la zone géographiquement distincte associée, chaque module d'activité étant associé à un type d'unité de flux, définissant une entrée pour obtenir des unités de flux d'entrée et une sortie pour délivrer en sortie des unités de flux de sortie, et réalisant un traitement des unités de flux entre elles à l'aide d'une entrée obtenue à partir de l'au moins un capteur surveillant le processus physique respectif attribué à la zone associée respective ; et
- la liaison de la pluralité de régions de traitement par couplage de modules d'activité à travers différentes régions de traitement, comprenant la liaison des sorties de flux avec les entrées de flux de différents modules d'activité, ségréguant ainsi un traitement de données à travers les différentes régions de traitement.

2. Procédé selon la revendication 1, dans lequel ledit établissement de la pluralité de régions de traitement au sein de l'emplacement géographique comprend l'association de parties fermées séparées au sein de l'emplacement géographique pour séparer les régions de traitement.

3. Procédé selon la revendication 1, dans lequel ledit établissement de la pluralité de régions de traitement au sein de l'emplacement géographique comprend la subdivision d'une partie fermée de l'emplacement géographique en de multiples zones des zones géographiquement distinctes et l'association d'une région de traitement respective à celles-ci.

4. Procédé selon la revendication 1, dans lequel ladite génération du module d'activité pour chaque région de traitement comprend la sélection du module d'activité à générer pour chaque région de traitement parmi une pluralité de modules d'activité prédéterminés sur la base du processus physique respectif attribué à la zone associée respective.

5. Procédé selon la revendication 1, dans lequel ladite liaison de la pluralité de régions de traitement comprend la liaison d'une première sortie d'un premier module d'activité, associé à un premier type d'unité de flux, à une première entrée d'un deuxième module d'activité, associé à un second type d'unité de flux, par l'intermédiaire d'une conversion pour convertir des informations de flux du premier type d'unité de flux en informations de flux du second type d'unité de flux.

6. Procédé selon la revendication 1, dans lequel ladite liaison de la pluralité de régions de traitement comprend la liaison d'une première sortie d'un premier module d'activité à une première entrée d'un deuxième module d'activité, et la liaison d'une seconde sortie du premier module d'activité à une première entrée d'un troisième module d'activité.

7. Procédé selon la revendication 6, dans lequel la première sortie du premier module d'activité est associée à un premier type d'unité de flux, et dans lequel la seconde sortie du premier module d'activité est associée à un second type d'unité de flux.

8. Procédé selon la revendication 6, dans lequel les première et seconde sorties du premier module d'activité sont associées à un type commun d'unité de flux, et dans lequel ladite liaison comprend la division d'unités de flux de sortie provenant du premier module d'activité en la première entrée du deuxième module d'activité et la première entrée du troisième module d'activité.

9. Procédé selon la revendication 8, dans lequel ladite division est mise à jour en réponse à des informations de flux nouvellement acquises au sein de l'emplacement géographique.

10. Procédé selon la revendication 8, dans lequel ladite division est basée sur des données historiques acquises au sein de l'emplacement géographique.

11. Procédé selon la revendication 1, dans lequel ladite association du module d'activité de chaque région de traitement à l'au moins un capteur disposé à proximité de la zone associée comprend l'association d'un premier module d'activité à au moins un premier capteur configuré pour acquérir des informations de flux d'un même type d'unité de flux que celui associé au premier module d'activité.

12. Procédé selon la revendication 1, dans lequel un premier module d'activité est associé à une pluralité de types d'unité de flux, et dans lequel l'au moins un capteur surveillant le processus physique attribué à la zone géographiquement distincte à laquelle le premier module d'activité est associé comprend une pluralité de capteurs comportant, pour chacun de la pluralité de types d'unité de flux, au moins un premier capteur configuré pour acquérir des informations de flux d'un type respectif d'unité de flux.

13. Procédé selon la revendication 1, comprenant la simulation du flux d'unités de flux par :
- la génération d'unités de flux d'entrée simulées pour une entrée d'au moins l'un parmi les modules d'activité ; et
- la simulation d'une réponse des modules d'activité sur la base des unités de flux d'entrée simulées.

14. Procédé selon la revendication 13, dans lequel ladite génération d'unités de flux d'entrée simulées comprend la génération d'une entrée de capteur simulée pour au moins un module d'activité, l'entrée de capteur simulée basée sur l'au moins un capteur respectif surveillant le processus physique attribué à la zone géographiquement distincte à laquelle l'au moins un module d'activité est associé.

15. Procédé selon la revendication 13, comprenant la mise à jour d'au moins l'un parmi un rapport de conversion d'une conversion associée à au moins certains des modules d'activité et un rapport de division d'une division associée à au moins certains des modules d'activité sur la base de la réponse simulée des modules d'activité.

16. Procédé selon la revendication 1, dans lequel ladite génération du module d'activité pour chaque région de traitement comprend la génération, pour une première région de traitement associée à une zone douanière à laquelle est attribué un processus douanier, d'un module d'activité basé sur le processus douanier et associé à un premier type d'unité de flux indiquant une personne individuelle.

17. Procédé selon la revendication 1, dans lequel ladite génération du module d'activité pour chaque région de traitement comprend la génération, pour une première région de traitement associée à une zone de tri de bagages à laquelle est attribué un processus de tri de bagages, d'un module d'activité basé sur le processus de tri de bagages et associé à un premier type d'unité de flux indiquant un élément de bagage.

18. Procédé selon la revendication 1, dans lequel ladite génération du module d'activité pour chaque région de traitement comprend la génération, pour une première région de traitement associée à une zone d'aire de trafic à laquelle est attribué un processus de circulation à la surface, d'un module d'activité basé sur le processus de circulation à la surface et associé à un premier type d'unité de flux indiquant un aéronef individuel.

19. Système de surveillance d'un flux d'unités de flux au sein d'un emplacement géographique composé d'une pluralité de zones géographiquement distinctes auxquelles est attribué un processus physique respectif surveillé par au moins un capteur, le système comprenant :
- une unité de traitement ; et
- un support non transitoire lisible par ordinateur sur lequel sont stockées des instructions exécutables par l'unité de traitement ;
configurés pour mettre en œuvre le procédé selon l'une quelconque des revendications précédentes.

20. Support non transitoire lisible par ordinateur sur lequel sont stockées des instructions exécutables par une unité de traitement, dans lequel une exécution des instructions amène l'unité de traitement à mettre en œuvre le procédé selon l'une quelconque des revendications 1 à 18.
